**Europäisches Patentamt**

**European Patent Office**

**Office européen des brevets**

(19)

(11) Veröffentlichungsnummer : **0 340 480 B1**

(12) # EUROPÄISCHE PATENTSCHRIFT

(45) Veröffentlichungstag der Patentschrift :
**21.10.92 Patentblatt 92/43**

(51) Int. Cl.$^5$ : **G05D 13/62**

(21) Anmeldenummer : **89106293.7**

(22) Anmeldetag : **10.04.89**

(54) **Verfahren zur Ermittlung der Drehzahl einer Maschine.**

(30) Priorität : **06.05.88 DE 3815530**

(43) Veröffentlichungstag der Anmeldung :
**08.11.89 Patentblatt 89/45**

(45) Bekanntmachung des Hinweises auf die
Patenterteilung :
**21.10.92 Patentblatt 92/43**

(84) Benannte Vertragsstaaten :
**CH DE FR GB IT LI SE**

(56) Entgegenhaltungen :
**WO-A-87/04025**
**DE-A- 3 722 099**
**US-A- 4 305 025**
**REGELUNGSTECHNIK Band 26, Nr. 11, 1978,**
**München,DE;Seiten 349 - 354; G. WEIHRICH:**
**"Drehzahlregelung von Gleichstromantriebe-**
**nunter Verwendung eines Zustands- und Stör-**
**grö en-Beobachters"**
**PROCEEDINGS IECON '87 1987 INTERNATIO-**
**NAL CONFERENCE ON INDUSTRIAL ELEC-**
**TRONICS, CONTROL, AND**
**INSTRUMENTATION,06.November 1987,Cam-**
**bridge, US;Seiten 184 - 186; Y. DOTE et al.:**
**"Digital Signal Processor(DSP)-Based Robust**
**Speed Regulation for DC Motor"**

(73) Patentinhaber : **Heidelberger Druckmaschinen**
**Aktiengesellschaft**
**Kurfürsten-Anlage 52-60 Postfach 10 29 40**
**W-6900 Heidelberg 1 (DE)**

(72) Erfinder : **Hauck, Dieter**
**Höhenweg 36**
**W-6930 Eberbach (DE)**
Erfinder : **May, Karl-Heinz**
**Hansstrasse 13a**
**W-6806 Viernheim (DE)**
Erfinder : **Müller, Hans**
**Albrecht-Dürer-Strasse 15**
**W-6902 Sandhausen (DE)**
Erfinder : **Rehberger, Jürgen**
**Talstrasse 3**
**W-6915 Dossenheim (DE)**

(74) Vertreter : **Stoltenberg, Baldo Heinz-Herbert et**
**al**
**c/o Heidelberger Druckmaschinen AG**
**Kurfürsten-Anlage 52-60**
**W-6900 Heidelberg 1 (DE)**

EP 0 340 480 B1

**Beschreibung**

Die Erfindung betrifft ein Verfahren zur Ermittlung der Drehzahl einer Maschine, gemäß dem Oberbegriff des Anspruchs 1. Siehe z.B. den Anfsatz im Regelungstechnik, 26. Jahrgang 1978, Heft 11, Seiten 349-354; G. Weihrich : "Drehzahlregelung von Gleichstromantrieben unter Verwendung eines Zustands- und Störgrößen - Beobachters".

Zur Messung der Drehzahl einer Maschine, insbesondere für Steuerungs- und Regelzwecke sind Drehzahlsensoren bekannt. Treten dabei Fehler auf, so kann es zu Fehlsteuerungen der Maschine kommen. Häufig werden als Drehzahlsensoren Inkrementalgeber verwendet und die von den Inkrementalgebern erzeugten Tachoimpulse gezählt. Dabei können Störimpulse, beispielsweise durch Einstreuungen in Verbindungsleitungen zwischen dem Inkrementalgeber und einem Steuergerät, entstehen. Ferner kann eine Ursache für Störimpulse auch im Inkrementalgeber selbst liegen, wenn beispielsweise lichtundurchlässige Teilchen in einen optischen Inkrementalgeber eindringen. Diese Störimpulse können ebenfalls zu einer Verfälschung des Istwertes führen.

Aufgabe der vorliegenden Erfindung ist es, die Sicherheit bei der Ermittlung der Drehzahl einer Maschine zu erhöhen.

Das erfindungsgemäße Verfahren ist dadurch gekennzeichnet, daß der Sollwert dem mathematischen Modell zugeführt wird, an dessen Ausgang ein errechneter Istwert ansteht, daß die Differenz zwischen dem gemessenen Istwert und dem errechneten Istwert gebildet wird und daß bei Überschreiten eines vorgegebenen Grenzweites durch den Absolutbetrag der Differenz der errechnete Istwert und anderenfalls der gemessene Istwert weitergeleitet wird.

Durch das erfindungsgemäße Verfahren wird im Falle gestörter Ausgangssignale des Drehzahlsensors eine Abweichung der Drehzahl der Maschine auf eine Abweichung begrenzt, die durch die Genauigkeit des mathematischen Modells gegeben ist.

Durch die in den Unteransprüchen aufgeführten Maßnahmen sind vorteilhafte Weiterbildungen und Verbesserungen der im Hauptanspruch angegebenen Erfindung möglich.

Dabei wird insbesondere eine weitere Erhöhung der Sicherheit ermöglicht, wenn mindestens zwei Tachosignale abgeleitet werden und bei Ausfall eines der Tachosignale selbsttätig auf das andere Tachosignal umgeschaltet wird. Außerdem umfassen Weiterbildungen des erfindungsgemäßen Verfahrens den Vergleich des Istwertes bzw. eines Drehrichtungssignals mit unabhängig von dem Drehzahlsensor gewonnenen Signalen. Dabei werden jeweils bei Überschreitung vorgegebener Abweichungen Fehlersignale erzeugt.

Ausführungsbeispiele der Erfindung sind in der Zeichnung anhand mehrerer Figuren dargestellt und in der nachfolgenden Beschreibung näher erläutert. Es zeigt:

Fig. 1 eine schematische Darstellung des Ausführungsbeispiels in Form eines Blockschaltbildes,

Fig. 2 ein Diagramm zur Erläuterung der auftretenden Istwerte bzw. errechneten Istwerte und

Fig. 3 ein Blockschaltbild eines Teils des Ausführungsbeispiels nach Fig. 1 in etwas detaillierterer Darstellung.

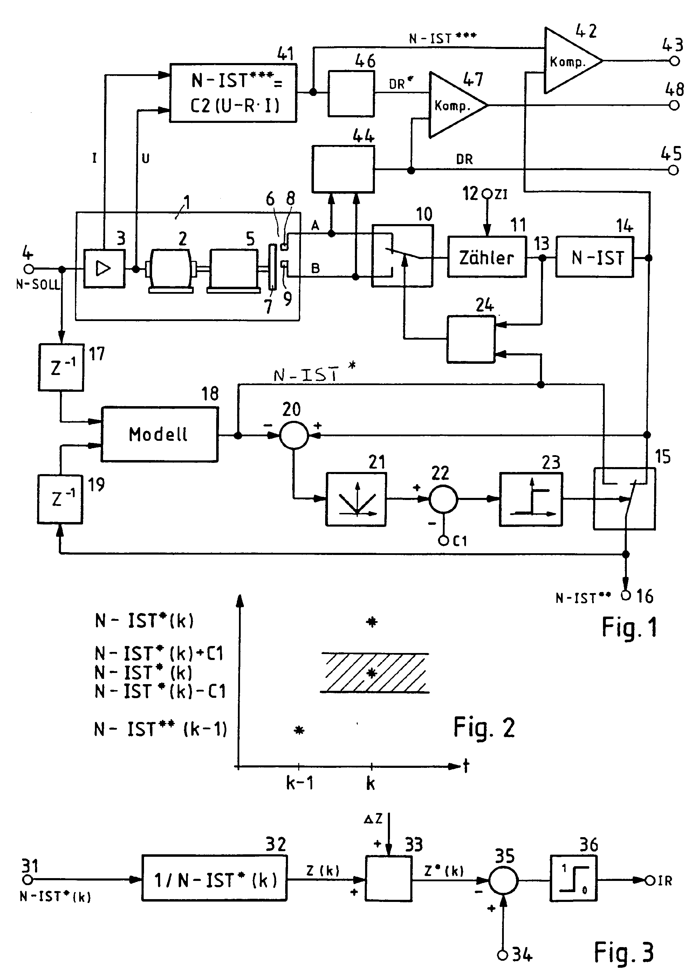

Bei den Darstellungen nach den Figuren 1 und 3 wurde der Übersichtlichkeit halber die Form von Blockschaltbildern gewählt, obwohl ein großer Teil der in den Figuren 1 und 3 dargestellten Funktionen durch einen entsprechend programmierten Rechner ausgeführt werden können. Eine vorteilhafte Aufteilung zwischen der Realisierung einzelner Funktionen durch Schaltungen und durch Rechnerfunktionen ist in der gleichzeitig eingereichten Patentanmeldung EP-A-0343352 der Anmelderin beschrieben und kann auf Teile der Ausführungsbeispiele nach den Figuren 1 und 2 angewendet werden.

Die Maschine 1, die beispielsweise eine Druckmaschine sein kann, enthält einen Antriebsmotor 2, der über eine Leistungsstufe 3 in Abhängigkeit von einem bei 4 zugeführten Sollwert N-SOLL für die Drehzahl gesteuert wird. Mit dem Teil 5 sind rotierende Teile der Maschine 1 zusammengefaßt, deren Drehzahl mit einem Inkrementalgeber 6 gemessen wird. Dabei kann in vorteilhafter Weise eine optische Teilscheibe 7 vorgesehen sein, welche von zwei optischen Abtastern 8, 9 abgetastet wird, die derart angeordnet sind, daß zwei gegeneinander um 90° phasenverschobene Tachosignale A und B gebildet werden. Diese werden einem Umschalter 10 zugeführt, so daß jeweils nur eines der Tachosignale zu einem Zähler 11 gelangt.

Der Zähler 11 zählt während jeweils einer oder mehrerer Perioden des Tachosignals bei 12 zugeführte höherfrequente Zählimpulse ZI, so daß der am Ausgang 13 des Zählers anstehende Zählerstand ein Maß für die Periodendauer des Tachosignals ist. Dieser Wert wird bei 14 in einen Wert N-IST für die Drehzahl umgerechnet und über einen Umschalter 15 dem Ausgang 16 zugeleitet und steht als N-IST** zu Steuerungs- bzw. Regelzwecken zur Verfügung. Der Sollwert N-SOLL wird ferner über eine Verzögerungsschaltung 17 um eine Abtastperiode Ta verzögert einem mathematischen Modell 18 der Maschine 1 zugeleitet, welches ferner den bei 19 ebenfalls um Ta verzögerten Wert N-IST** empfängt.

Das mathematische Modell 18 leitet aus den zugeführten Werten einen Wert N-IST* ab. Dabei wird folgende Funktion angewendet:

$$N\text{-}IST*(k) = V \cdot N\text{-}IST**(k\text{-}1) + (1\text{-}V) \cdot N\text{-}SOLL(k\text{-}1),$$

wobei $V = e^{-Ta/T}$ gilt. Dabei ist Ta die Abtastperiode und T die Streckenzeitkonstante. Der somit errechnete Istwert N-IST* wird mit dem Istwert N-IST wie folgt verglichen. Zunächst erfolgt eine Subtraktion 20, worauf bei 21 der Absolutwert der Differenz gebildet wird.

Von dem Absolutwert wird bei 22 eine Konstante C1 abgezogen. Bei 23 wird ein binäres Signal in Abhängigkeit davon erzeugt, ob die bei 22 gebildete Differenz kleiner als 0 oder größer = 0 ist. Der Umschalter 15 wird dann derart gesteuert, daß der Wert N-IST zum Ausgang 16 geführt wird, wenn die Abweichung kleiner als C1 ist, während bei Überschreiten dieser Abweichung oder bei Gleichheit der Schalter 15 in die linke Position gelegt wird.

Bei einer großen Abweichung wird also angenommen, daß N-IST gestört ist und daß der mit Hilfe des mathematischen Modells 18 gebildete errechnete Wert N-IST∗ dem wahren Wert der Drehzahl N näherkommt.

Der Umschalter 10 ist von einer Steuereinrichtung 24 derart steuerbar, daß bei Ausfall eines der Tachosignale auf das andere umgeschaltet wird. Einzelheiten dazu werden später im Zusammenhang mit Fig. 3 erläutert.

Fig. 2 stellt die in dem Ausführungsbeispiel nach Fig. 1 auftretenden Drehzahlwerte in übersichtlicher Weise dar. Dabei ist der Toleranzbereich für N-IST∗ schraffiert angedeutet. Ein Istwert N-IST∗∗(k-1) ist für den vorangegangengen Abtastzeitpunkt k-1 dargestellt, während sich weitere Werte auf den Abtastzeitpunkt k beziehen.

Fig. 3 zeigt eine für die Steuereinrichtung 24 (Fig. 1) geeignete Schaltung. Dabei wird der Wert N-IST∗(k) über einen Eingang 31 einer Schaltung 32 zur Bildung des Kehrwertes zugeführt. Das Ausgangssignal der Schaltung 32 stellt eine Zeit Z(k) dar, welche der Periodendauer der Tachoimpulse oder einem Vielfachen davon entsprechen - wenn der Zähler 11 mit frequenzgeteilten Tachosignalen angesteuert wird. Der Zeit Z(k) wird bei 33 eine Toleranzzeit deltaZ hinzuaddiert. Der entstandene Wert Z∗(k) wird von dem bei 34 zugeführten Ausgangssignal des Zählers 11 in der Schaltung 35 subtrahiert. In Abhängigkeit von der Differenz wird bei 36 ein binäres Signal erzeugt, das an sich eine Betätigung des Umschalters 10 verursachen könnte. Das Signal wird jedoch bei dem Ausführungsbeispiel als Programmunterbrechungssignal (Interrupt, IR) einem Rechner zugeführt, der seinerseits den Umschalter 10 steuert. Dieses hat den Vorteil, daß im Rechner noch weitere Prüfungen vorgenommen werden können und außer der Umschaltung beispielsweise noch ein Alarm ausgelöst werden kann. Ferner können im Rechner Maßnahmen für den Fall vorgesehen sein, daß beide Tachosignale mit Störungen behaftet sind.

Zur weiteren Überwachung kann bei einem Gleichstrommotor die elektromotorische Kraft errechnet und als weiterer errechneter Istwert N-IST∗∗∗ mit dem vom Drehzahlsensor abgegebenen Istwert N-IST verglichen werden. Dieses erfolgt bei dem Ausführungsbeispiel nach Fig. 1 mit einer Schaltung 41, welcher die Ankerspannung und der Ankerstrom zugeführt werden. Der weitere errechnete Istwert ergibt sich dann zu N-IST∗∗∗ = C2(U-R·I), wobei C2 eine Konstante, U die Ankerspannung, R der Ankerwiderstand und I der Ankerstrom ist. Das Ausgangssignal der Schaltung 41 wird einem Komparator 42 zugeführt, der in ähnlicher Weise wie die Schaltungen 20 bis 23 aufgebaut ist. Bei Abweichungen, die über einen vorgegebenen Wert hinausgehen, wird am Ausgang 43 des Komparators 42 ein Fehlersignal erzeugt.

Aus den Tachosignalen A und B kann durch Abtastung eines der Tachosignale an den Flanken des anderen ein Drehrichtungssignal gewonnen werden. Hierzu ist die Schaltung 44 vorgesehen. Vom Ausgang 45 der Schaltung 44 kann ein Drehrichtungssignal DR für Steuerungs- bzw. Regelzwecke entnommen werden. Um auch hierbei Störungen im Bereich des Inkrementalgebers zu erkennen, wird aus dem Ausgangssignal der Schaltung 41 bei 46 ein Signal DR∗ abgeleitet, welches das Vorzeichen der elektromotorischen Kraft darstellt. Dieses wird in einem Komparator 47 mit dem aus den Tachosignalen gewonnenen Drehrichtungssignal DR verglichen. Bei Abweichungen wird am Ausgang 48 ein Fehlersignal abgegeben.

## Patentansprüche

1. Verfahren zur Ermittlung der Drehzahl einer Maschine (5), welche mit einer Antriebseinrichtung (2) zum Antrieb der Maschine und einem Drehzahlsensor (6) zur Messung der Drechzahlder Maschine versehen ist, wobei dem Antrieb ein Sollwert (N-Soll) für die Drehzahl der Antriebseinrichtung vorgegeben wird und dem Drehzahlsensor ein gemessener Istwert (N-IST) entnehmbar ist, sowie ein mathematisches Modell(18)der durch die Antriebseinrichtung (2) und die Maschine (5) gebildeten Regelstrecke vorgesehen ist, dadurch gekennzeichnet, daß der Sollwert dem mathematischen Modell (18) zugeführt wird, an dessen Ausgang ein errechneter Istwert (N-IST∗) ansteht, daß die Differenz zwischen dem gemessenen Istwert und dem errechneten Istwert gebildet wird und daß bei Überschreiten eines vorgegebenen Grenzwertes ($C_1$) durch den Absolutbetrag der Differenz der errechnete Istwert und anderenfalls der gemessene Istwert weitergeleitet wird.

2. Verfahren nach Anspruch 1, dadurch gekennzeichnet, daß ferner der weitergeleitete Istwert dem mathematischen Modell der Regelstrecke zugeführt wird.

3. Verfahren nach einem der Ansprüche 1 oder 2, dadurch gekennzeichnet, daß bei zeitquantisiertem Vorliegen des Sollwertes und des Istwertes der Sollwert und der weitergeleitete Istwert um je eine Abtastperiode verzögert dem mathematischen Modell der Regelstrecke zugeführt werden.

4. Verfahren nach Anspruch 1, dadurch gekennzeichnet, daß von einem Inkrementalgeber mindestens zwei Tachosignale erzeugt werden, daß der errechnete Istwert für die Drehzahl in eine Zeit umgerechnet wird und daß bei Auftreten eines Impulses des Tachosignals um mehr als eine zulässige Abweichung nach der errechneten Zeit auf ein anderes Tachosignal umgeschaltet wird.

5. Verfahren nach Anspruch 1, dadurch gekennzeichnet, daß von einem Inkrementalgeber mindestens ein Tachosignal erzeugt wird, daß der errechnete Istwert für die Drehzahl in eine Zeit umgerechnet wird und daß bei Auftreten eines Impulses des Tachosignals um mehr als eine zulässige Abweichung vor dem Ablaufen der errechneten Zeit ein Störimpuls angezeigt wird.

6. Verfahren nach Anspruch 1, dadurch gekennzeichnet, daß von einem Inkrementalgeber mindestens zwei gegeneinander phasenverschobene Tachosignale erzeugt werden und daß durch Abtastung des einen Tachosignals an Flanken des anderen Tachosignals ein Drehrichtungssignal erzeugt wird.

7. Verfahren nach Anspruch 6, dadurch gekennzeichnet, daß das Drehrichtungssignal mit einem eingegebenen Maschinenbefehl verglichen wird, und daß bei Abweichungen ein Fehlersignal erzeugt wird.

8. Verfahren nach Anspruch 6, dadurch gekennzeichnet, daß das Drehrichtungssignal mit dem Vorzeichen eines aus der Ankerspannung und dem Ankerstrom eines Antriebsmotors der Maschine errechneten Wertes der elektromotorischen Kraft (EMK) verglichen wird.

9. Verfahren nach Anspruch 1, dadurch gekennzeichnet, daß der Istwert ferner mit einem weiteren errechneten Istwert verglichen wird, der aus der Ankerspannung und dem Ankerstrom eines Antriebsmotors der Maschine errechnet wird, und daß bei Abweichungen, die eine vorgegebene Größe überschreiten, ein Fehlersignal erzeugt wird.

## Claims

1. Method of determining the rotational speed of a machine (5) having a drive means (2) for driving said machine and a rotational-speed sensor (6) for measuring the rotational speed of said machine, a setpoint (N set) for the rotational speed of said drive means being introduced in said drive, a measured actual value (N act) being obtainable from said rotational-speed sensor, and a mathematical model (18) of the controlled system formed by said drive means (2) and said machine (5) being provided,
characterized in
that said setpoint value is supplied to the mathematical model (18), a computed actual value (N act∗) being present at the output of said mathematical model, that the difference between the actual value measured and the actual value computed is determined, and that the actual value computed and the actual value measured, respectively, is passed on if the absolute value of the difference exceeds ing a given limit value (C1).

2. Method according to Claim 1,
characterized in
that the actual value which has been passed on is supplied to the mathematical model of the controlled system.

3. Method according to anyone of Claim 1 or 2,
characterized in
that, with providing the setpoint value and the actual value in time-quantized form, the setpoint value and the actual value which has been passed on are each supplied to the mathematical model of the controlled system by a respective scanning period.

4. Method according to Claim 1,
characterized in
that at least two angular-speed signals are generated by an incremental pulse generator-, that the computed actual value for the rotational speed is-converted into a time value, and that a switchover to another angular-speed signal is effected if a pulse of the angular-speed signal occurs more than a permissible deviation after the computed time value.

5. Method according to Claim 1,
characterized in
that at least one angular-speed signal is generated by an incremental pulse generator, that the computed actual value for the rotational speed is converted into a time value, and that an interference pulse is indicated if a pulse of the angular-speed signal occurs more than a permissible deviation before the computed time has elapsed.

6. Method according to Claim 1,

characterized in
that at least two angular-speed signals displaced in phase with respect to each other are generated by an incremental pulse generator, and that a direction-of-rotation signal is generated at edges of the other angular-speed signal by scanning the one angular-speed signal.

7. Method according to Claim 6,
characterized in
that the direction-of-rotation signal is compared with an input machine command, and that an error signal is generated in the case of a deviation.

8. Method according to Claim 6,
characterized in
that the direction-of-rotation signal having the sign of a value of the electromotor force (emf) computed from the armature voltage and the armature current of a drive motor of the machine.

9. Method according to Claim 1,
characterized in
that the actual value is compared with a further computed actual value which is computed from the armature voltage and the armature current of a drive motor of the machine, and that an error signal is generated if a respective deviation exceeds a given value.


**Revendications**

1. Procédé pour déterminer la vitesse de rotation d'une machine (5) munie d'un dispositif d'entraînement (2) pour entraîner la machine et d'un capteur de vitesse de rotation (6) pour mesurer la vitesse de rotation de la machine, selon lequel une valeur de consigne (N-SOLL) pour la vitesse de rotation du dispositif d'entraînement est fournie au préalable à l'entraînement et une valeur réelle (N-IST) mesurée peut être prélevée sur le capteur de vitesse de rotation, ainsi qu'avec prévision d'un modèle mathématique (18) du circuit de réglage formé par le dispositif d'entraînement (2) et la machine (5), caractérisé en ce que l'on applique la valeur de consigne au modèle mathématique (18), dont la sortie présente une valeur réelle (N-IST∗) calculée, que l'on forme la différence entre la valeur réelle mesurée et la valeur réelle calculée et que, en cas de dépassement d'une valeur limite (CI) préfixée par la grandeur absolue de la différence, on transmet la valeur réelle calculée pour la suite du traitement, sinon on transmet la valeur réelle mesurée pour la suite du traitement.

2. Procédé selon la revendication 1, caractérisé en ce que, en outre, on applique au modèle mathématique du circuit de réglage la valeur réelle transmise pour la suite du traitement.

3. Procédé selon la revendication 1 ou 2, caractérisé en ce que, en présence d'une valeur de consigne et d'une valeur réelle quantifiées dans le temps, on applique la valeur de consigne et la valeur réelle transmise pour la suite du traitement au modèle mathématique du circuit de réglage en les retardant chacune d'une période d'échantillonnage.

4. Procédé selon la revendication 1, caractérisé en ce qu'un générateur incrémentiel produit au moins deux signaux tachymétrique, que l'on convertit par calcul la valeur réelle calculée pour la vitesse de rotation en un temps et que, en cas d'apparition d'une impulsion du signal tachométrique avec un écart supérieur à un écart admis après le temps calculé, on produit la commutation sur un autre signal tachymétrique.

5. Procédé selon la revendication 1, caractérisé en ce pou'un générateur incrémentiel produit au moins un signal tachométrique, que l'on convertit par calcul la valeur réelle calculée pour la vitesse de rotation en un temps et que, en cas d'apparition d'une impulsion du signal tachymétrique avec un écart supérieur à un écart admissible avant l'expiration du temps calculé, on produit l'affichage d'une impulsion parasite.

6. Procédé selon la revendication 1, caractérisé en ce qu'un générateur incrémentiel produit au moins deux signaux tachymétriques mutuellement déphasés et que, par échantillonnage d'un signal tachymétrique, on produit sur les flancs de l'autre signal tachymétrique un signal de sens de rotation.

7. Procédé selon la revendication 6, caractérisé en ce que l'on compare le signal de sens de rotation avec un ordre appliqué à la machine et que l'on produit un signal d'erreur en cas d'écarts.

8. Procédé selon la revendication 6, caractérisé en ce que l'on compare le signal de sens de rotation avec le signe d'une valeur calculée, à partir de la tension d'induit et du courant d'induit d'un moteur d'entraînement de la machine, de la force électromotrice (FEM).

9. Procédé selon la revendication 1, caractérisé en ce que l'on compare la valeur réelle en outre avec une valeur réelle calculée supplémentaire, laquelle est calculée à partir de la tension d'induit et du courant d'induit d'un moteur d'entraînement de la machine, et que l'on produit un signal d'erreur pour des écarts qui dépassent une grandeur dépassée.

Fig. 1

Fig. 2

Fig. 3